# EUROPEAN PATENT SPECIFICATION

(11) **EP 0 583 054 B1**
(45) Date of publication and mention of the grant of the patent: **01.10.1997**
(21) Application number: 93304320.0
(22) Date of filing: 03.06.1993
(51) Int. Cl.: H02P 7/68

(54) **Commutator type motor differential parallel operating circuit with unbalance current circulatory choke function**
Parallel und differenzierende Betriebsschaltung für Kommutatormotoren mit Kreisströme unterdrückender Funktion
Circuit de moteurs du type à commutateurs, à fonctionnement parallèle différentiel et amortissement des courants circulatoires

(30) Priority: 30.07.1992 GB 9216219
(43) Date of publication of application: 16.02.1994
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- CH-A- 547 574
- DE-B- 1 513 630
- DE-C- 116 016
- FR-A- 493 334
- GB-A- 1 428 104
- GB-A- 1 590 441
- US-A- 4 549 119
- PATENT ABSTRACTS OF JAPAN vol. 1, no. 161 (M-77)(5927) 20 December 1977 & JP-A-52105420 (MEIDENSHA K.K.) 3 September 1977
- PATENT ABSTRACTS OF JAPAN vol. 2, no. 78 (M-78)(1987) 21 June 1978 & JP-A-53045811 (MEIDENSHA K.K.) 25 April 1978
- PATENT ABSTRACTS OF JAPAN vol. 2, no. 21 (M-77)(7235) 10 February 1978 & JP-A-52135118 (NIPPON DENSO K.K.) 11 November 1977

## Description

GB1590441 in the name of Rubery Owen Conveyancer Limited discloses a battery driven mechanical handling truck in which an electric motor circuit is provided comprising at least two DC electric motors in a circuit with a common battery power source, armatures of the motors being connected together in parallel and driving individual wheels of the truck, and field coils of the motors being connected in series with one another and in series with the paralleled armatures. The armatures are connected to diodes which may be shorted out by a switch. British Patent No. 1428104 in the name of J & T Electrical Controls Limited discloses a drive apparatus for a route display indicator for buses. The display includes two rollers, each roller being turned by a separate motor. The motors are connected in parallel to each other in an electrical circuit and each motor includes a diode in series with that motor, and a resistor is placed in parallel with each diode. The diodes are connected in opposite senses so that when the power supply is connected in one sense, the diode and resistor arrangement causes one motor to move at a faster rate than the other motor, whereas when the polarity of the power supply is connected in the opposite sense, the diodes cause the other motor to turn at a faster rate than the first motor. This maintains a tension in the web which is passed over the rollers and indicates the destination of that bus.

### SUMMARY OF THE INVENTION

The present commutator type motor differential parallel operating circuit with unbalance voltage circulatory choke function relates to provide two or more series motors or permanent-magnet type motors, whose armature windings are respectively series with choke diodes along the positive direction of the current, and each end of the choke diodes is parallel each other after parallel connected to a limit resistor, and further series with respective series windings or series connected to the parallel series windings whereby series winding multiple motors parallel running has the characteristics of unbalance voltage circulatory- choke function subject to load difference, and has some improvements for operative characteristics of the original series or parallel means as a result of reduction in circulatory current flow between the armatures or distribution torque or regeneration power braking; or two or more permanent-magnet type motors, whose armature windings are parallel connected each other after respectively series with anti-circulatory diodes parallel connected to limit resistors for restraining circulatory current flow. The anti-circulatory diodes are parallel connected to the limit resistors for giving regulation function for torque distribution between/among the motors and giving restraining function for current at the moment of regeneration power braking. Series limit resistors series connected with the choke diodes and resistors parallel connected to the choke diodes may be jointly used.

An electric circuit for non-synchronised driving of at least two motors according to a first aspect of the present invention comprises at least two electric motors, each motor including an armature winding and a series winding, each armature winding connected in parallel with the or each other armature winding and with a feedback diode for reducing cyclic current flow within the circuit, each series winding connected in series with the or each other series winding and with the parallel armature windings, and each armature winding connected in series with a series diode, said series diodes being connected in the same operational sense,
characterised by a resistor connected in parallel across each series diode and wherein, in use, differences in load on each motor are compensated for by uneven voltages across each armature winding of each motor.

An electric circuit for concurrently driving at least two motors according to a second aspect of the invention comprises at least two motors, each motor connected in parallel with the or each other motor, each motor connected in series with a series diode, the circuit including a resistor connected in parallel across each series diode,
characterized in that each motor includes an armature winding, in that said series connection between each motor and one of said series diodes is a series connection between each armature winding and one of said series diodes, in that each motor includes a magnet for creating a field across the armature winding, in that said series diodes are connected in the same operational sense to simultaneously pass current, and in that each motor is driven independently and wherein, in use, differences in load on each motor are compensated for by uneven voltages across each armature winding of each motor.

### BRIEF DESCRIPTION OF THE DRAWINGS

FIG. 1 is a circuit diagram showing the basic principle of the present commutator type motor differential parallel operating circuit with unbalance voltage circulatory chocke function.

FIG. 2 is a circuit diagram showing the basic principle of the present commutator type motor differential parallel operating circuit with unbalance voltage circulatory choke function, which is consisted of permanent-magnet type or shunt winding type fields.

### DETAILED DESCRIPTION OF THE INVENTION

The conventional commutator type motor with series field winding or commutator type motor with series field winding or commutator type motor with shunt field or permanent-magnet field, if for multiple motors parallel driving, a mean operation could hardly be accomplished between the two motors, particularly because of quite a large varied slope between the torque and running speed of series motors. Notwithstanding, for practical application we often need much mean operating characteristics, for instance, when it is applied to an electric loader with equal load, the present commutator type motor differential parallel operating circuit with unbalance voltage circulatory choke function relates to commutator type motor parallel driving circuit with series field windings respectively having much mean operating characteristics, which is characterized in that, two or more series motor have armature windings parallel connected each other and then series connected to respective series windings. It is mainly related to the use of aforesaid specific connection means allowing to obtain a mean EMF among respective motor armatures and further to obtain much mean current while enabling the characteristics of respective motors to become uniform as a result of simultaneous increase/decrease in series field winding excitation current among respective motors; armature windings are respectively series with choke diodes along the positive direction of current, and each end of the choke diodes is parallel each other after parallel connected to a limit resistor, and further series with respective series windings or series connected to the parallel series windings for operating respectively during synchronous operating while when load is uneven, with the help of mutual choking between the diodes limiting circulatory flow by means of limit resistors. The same applies to the commutator type motors with permanent-magnet type field.

The first embodiemnt of the present invention and the auxiliary circuit will be described as follows:

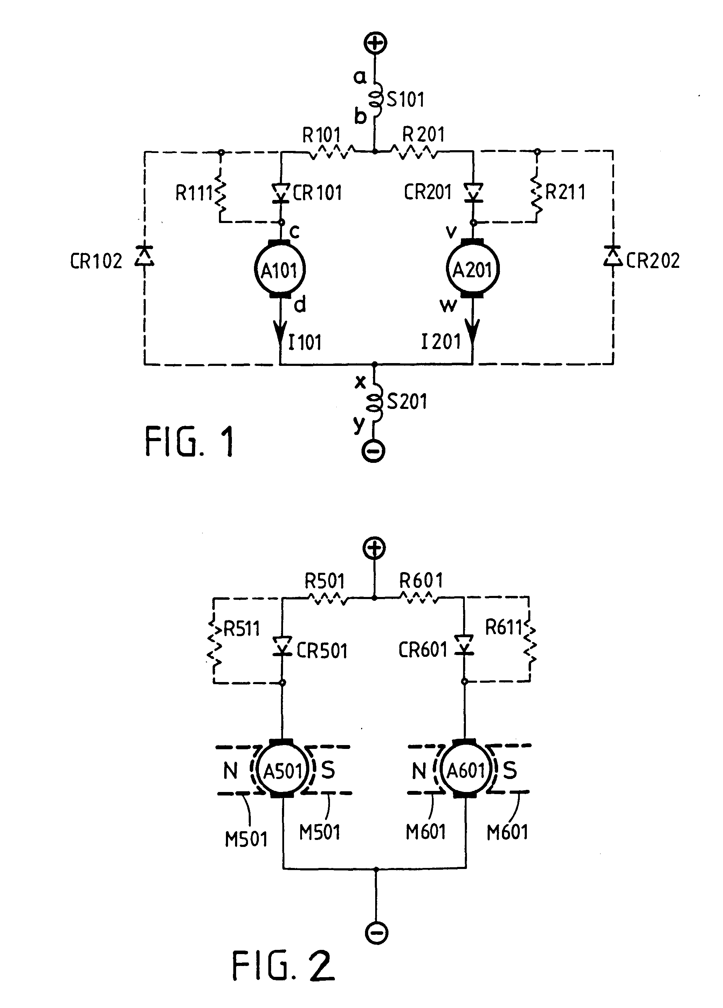

Referring to FIG.1, an electric circuit for non-synchronised driving of at least two motors is shown. Each motor includes an armature and a series winding. The circuit connects the armatures in parallel with each other in such a manner that, in use, differences in load on each motor are compensated for by uneven voltages across each armature winding of each motor, reducing circulatory current.

A first motor includes a series winding S101 and an armature winding A101, and a second motor includes a series winding S201 and an armature winding A201.

The series field winding S101 of the said first motor has ends a and b, and its end a is connected to a positive terminal of a power supply, and the end b is connected to the armature A101 at its end c. The armature A201 of the said second motor has ends v and w, and its end v is connected to the end b of the series field winding S101 of the first motor while end b is connected to the end c of armature A101. End w of the armature A201 of the second motor leads to an end x of the seies field winding S201 and end d of the armature A101 of the first motor. End y of the series field winding S201 of the said second motor leads to the negative terminal of the power supply.

When the motors are being driven together in normal operation, the current passing through the series windings of the two motors is the same and equal to the sum of two armature currents I101, I201, and according to the operation of the aforesaid basic circuits, when the first motor load increases, its speed is reduced while EMF is decreasing too to result in an increase in the current I101 passing therethrough. Thus the series field excitation current of the two motors is increased simultaneously and the speed of the second motor also decreases. Compared to two motors connected in parallel with each other and each motor having its armature winding and series winding is connected in series, the speed difference between the motors is smaller to improve parallel stability or evenness between motors;

When the second motor load is increased, I201 is increased while the response of the first motor is the same. The load current value of each motor series winding is summed with series motor armature to become total synthetic current value. Contrary to normal series motors, the series field load current value is the first armature load current value, i.e. each motor has series field winding with a greater load current value. The aforesaid circuit is a basic circuit so that we may improve the performance by means of the other auxiliary elements.

A series limit resistor R101,R201 may be connected in series with each armature winding.

A series diode CR101 and CR201 are also connected in series with each armature, and in parallel to a resistor R111 and R211, so as to reduce thermal loss under positive driving, and to maintain common driving torque when a speed differential occurs between the motors while preventing partial motors losing torque as a result of each series diode under slight speed difference between the motors, and to limit output during power regeneration braking. The series limit resistors originally series connected to the diodes may be adopted simultaneously.

An armature flywheel diode CR102 and CR202 is connected in parallel across each armature winding A101,A201, series diode CR101,CR201 and resistor R111,R211 for reducing cyclic current flow within the circuit. The armature flywheel diodes CR102 and CR202 are known here as feedback diodes.

FIG.2 shows the basic principle of the present commutator type motor differential parallel operating circuit with unbalance voltage circulatory choke function. The circuit concurrently drives at least two motors each of which is a motor of the permanent-magnet type wherein two permanent-magnet type motors are used as example for explanation.

A first motor includes a permanent-magnet for generating a magnetic field across an armature A501. A second motor includes a permanent-magnet M601 for generating a magnetic field across an armature A601.

Each armature may be connected in series with a series limit resistor R501,R601. The first motor armature A501 and the second motor armature A601 may be connected in series to the limit resistors R501 and R601 respectively to prevent the other armature becoming the load while limiting circulatory current when the load is reducing as well as to maintain each motor with a proportion of the torque when a load differential occurs between the motors.

Each armature is connected in series to a circulatory current limit diode CR501,CR601 and each diode CR501,CR601 is connected in parallel to a limit resistor R511,R611. The first motor armature A501 and the second motor armature A601 are connected in series with choke or circulatory limit diodes CR501 and CR601 respectively and each are connected in the same operative sense permitting current to pass from the positive terminal to the negative terminal. This prevents another armature becoming the load to form circulatory current flow when the load is reducing. The said diodes CR501 and CR601 in series with the armatures are parallel connected to the resistors R511 and R611 for regenerative power generator as well as provided to maintain each motor with a distribution torque when a speed differential occurs between the motors and to reduce thermal loss under positively driving. The series limit resistors R501 and R601 may be adopted simultaneously.

For practical application, the present commutator type motor differential parallel operating circuit with unbalance voltage circulatory choke function may be used in a flexible manner in the following ways:
(1) Mechanical structure type: including a connection of two or more independent commutator motors or having a common housing structure;
(2) Electrical structure type: comprising two or more motors with permanent-magnet type field and commutator type armatures, or the motors with shunt winding type fields and commutator type armatures, ie. the shunt winding in place of permanent magnet for forming the field.

To conclude the above statement, the present commutator type motor differential parallel operating circuit with unbalance voltage circulatory choke function relates to provide two or more series motors or permanent-magnet type motors, of which armature windings are respectively series with choke diodes along the positive direction of current,and each end of the choke diodes is parallel with each other after parallel connected to limit resistor, and further series with respective series windings or series connected to the parallel series windings whereby series winding multiple motors parallel running has the characteristics of unbalance voltage circulatory choke function subject to load difference. This improves operative characteristics of the original series or parallel means as a result of reduction in circulatory flow between the armatures or distribution torque or regeneration power braking; or two or more permanent-magnet type motors, of which armature windings are parallel connected each other after respectively series with anti-circulatory diodes and may be series connected to series limit resistors for restraining circulatory flow, the anti-circulatory diodes being parallel connected to limit resistors for giving regulation function for torque distribution between/among the motors and giving restraining function for current at the moment of regeneration power braking.

## Claims

1. An electric circuit for non-synchronised driving of at least two motors, the circuit comprising at least two electric motors, each motor including an armature winding (A101,A201) and a series winding (S101,S201), each armature winding (A101) connected in parallel with the or each other armature winding (A201) and with a feedback diode (CR102,CR202) for reducing cyclic current flow within the circuit, each series winding (S101) connected in series with the or each other series winding (S201) and with the parallel armature windings (A101,A201), and each armature winding (A101,A201) connected in series with a series diode (CR101,CR201), said series diodes being connected in the same operational sense,
characterised by a resistor (R111,R211) connected in parallel across each series diode (CR101,CR201) and wherein, in use, differences in load on each motor are compensated for by uneven voltages across each armature winding (A101,A201) of each motor.

2. An electric circuit for concurrently driving at least two motors, the circuit comprising at least two motors, each motor connected in parallel with the or each other motor, each motor connected in series with a series diode (CR501,CR601), the circuit including a resistor (R511,R611) connected in parallel across each series diode (CR501,CR601),
characterised in that each motor includes an armature winding (A501,A601), in that said series connection between each motor and one of said series diodes (CR501,CR601) is a series connection between each armature winding (A501,A601) and one of said series diodes (CR501,CR601), in that each motor includes a permanent magnet (M501,M601) for creating a field across the armature winding (A501,A601), in that said series diodes (CR501),CR601) are connected in the same operational sense to simultaneously pass current, and in that each motor is driven independently and wherein, in use, differences in load on each motor are compensated for by uneven voltages across each armature winding (A501,A601) of each motor.

## Patentansprüche

1. Elektrischer Schaltkreis für nicht synchronisierten Antrieb von mindestens zwei Motoren, wobei der Schaltkreis mindestens zwei elektrische Motoren aufweist, wobei jeder Motor eine Ankerwicklung (A101, A201) und eine Reihenwicklung (S101, S201) enthält, wobei jede Ankerwicklung (A101) jeweils mit der anderen Ankerwicklung (A201) und mit einer Rückkoppeldiode (CR102, CR202) zur Reduzierung eines zyklischen Stromflusses innerhalb des Schaltkreises parallel geschaltet ist, wobei jede Reihenwicklung (S101) in Serie zu der jeweils anderen Reihenwicklung (S201) und zu den parallelen Ankerwicklungen (A101, A201) geschaltet ist, und jede Ankerwicklung (A101, A201) in Serie zu einer Reihendiode (CR101, CR201) geschaltet ist, wobei die Reihendioden in derselben Betriebsrichtung angeschlossen sind,
**gekennzeichnet durch**
einen parallel zu jeder Reihendiode (CR 101, CR 201) geschalteten Widerstand (R111, R211), wobei bei Gebrauch, Unterschiede in der Last an jedem Motor durch ungleichmäßige Spannungen über jede Ankerwicklung (A101, A201) eines jeden Motors ausgeglichen werden.

2. Elektrischer Schaltkreis zum gleichzeitigem Antrieb von mindestens zwei Motoren, wobei der Schaltkreis mindestens zwei Motoren aufweist, wobei jeder Motor parallel zu dem jeweiligen anderen Motor geschaltet ist, wobei jeder Motor in Serie zu einer Reihendiode (CR501, CR601) geschaltet ist, wobei der Schaltkreis einen parallel zu jeder Reihendiode (CR501, CR601) angeschlossenen Widerstand (R511, R611) enthält,
**dadurch gekennzeichnet,**
daß jeder Motor eine Ankerwicklung (A501, A601) enthält, daß die serielle Verbindung zwischen jedem Motor und einer der Reihendioden (CR501, CR601) eine serielle Verbindung zwischen jeder Ankerwicklung (A501, A601) und einer der Reihendioden (CR501, CR601) ist, daß jeder Motor einen Permanentmagneten (M501, M601) zur Erzeugung eines durch die Ankerwicklung (A501, A601) verlaufenden Feldes enthält, daß die Reihendioden (CR501, CR601) in derselben Betriebsrichtung zum gleichzeitigen Passieren von Strom geschaltet sind, und daß jeder Motor unabhängig angetrieben wird, wobei bei Gebrauch, Unterschiede der Last in jedem Motor durch ungleichmäßige Spannungen über jede Ankerwicklung (A501, A601) für jeden Motor ausgeglichen werden.

## Revendications

1. Circuit électrique pour la commande non synchronisée d'au moins deux moteurs, le circuit comprenant au moins deux moteurs électriques, chaque moteur comportant un enroulement d'induit (A101, A201) et un enroulement série (S101, S201), chaque enroulement d'armature (A101) étant branché en parallèle avec le ou chaque autre enroulement d'induit (A201) et avec une diode de rétroaction (CR102, CR202) pour réduire le débit de courant cyclique à l'intérieur du circuit, chaque enroulement série (S101) étant branché en série avec le ou chaque autre enroulement série (S201) et avec les enroulements d'induit en parallèle (A101, A201), et chaque enroulement d'induit (A101, A201) étant branché en série avec une diode série (CR101, CR201), ces diodes série étant branchées dans le même sens de conduction opérationnel,
caractérisé par
une résistance (R111, R211) branchée en parallèle aux bornes de chaque diode série (CR101, CR201) et dans lequel, en cours d'utilisation, des différences de charge sur chaque moteur sont compensées par des tensions inégales aux bornes de chaque enroulement d'induit (A101, A201) de chaque moteur.

2. Circuit électrique pour la commande simultanée d'au moins deux moteurs, le circuit comprenant au moins deux moteurs, chaque moteur étant branché en parallèle avec le ou chaque autre moteur, chaque moteur étant branchée en série avec une diode série (CR501, CR601), le circuit comprenant une résistance (R511, R611) branchée en parallèle aux bornes de chaque diode série (CR501, CR601),
caractérisé en ce que
- chaque moteur comprend un enroulement d'induit (A501, A601),
- le branchement série entre chaque moteur et l'une des diodes série (CR501, CR601) est un branchement série entre chaque enroulement d'induit (A501, A601) et l'une des diodes série (CR501, CR601),
- chaque moteur comprend un aimant permanent (M501, M601) pour créer un champ à travers l'enroulement d'induit (A501, A601),
- les diodes série (CR501, CR601) sont branchées dans le même sens de conduction opérationnel pour laisser passer simultanément le courant, et
- chaque moteur est commandé indépendamment tandis que, en cours d'utilisation, des différences de charge sur chaque moteur sont compensées par des tensions inégales aux bornes de chaque enroulement d'induit (A501, A601) de chaque moteur.
